# EUROPEAN PATENT APPLICATION

(11) **EP 4 800 366 A1**
(43) Date of publication of application: **02.09.2026**
(21) Application number: 26160938.2
(22) Date of filing: 26.02.2026
(51) Int. Cl.: G01M 3/40, B07C 5/34

(54) **MACHINE AND METHOD FOR THE INSPECTION OF CONTAINERS, PREFERABLY OF THE PHARMACEUTICAL INDUSTRY**

(30) Priority: 27.02.2025 IT 202500004005
(71) Applicant: G.D S.p.A., 40133 Bologna (IT)
(72) Inventor: FABBRI, Dario, 40133 Bologna (IT); MEDINA, Enrico, 40133 Bologna (IT); MORETTI, Carlo, 40133 Bologna (IT)
(74) Representative: Studio Torta S.p.A.

(57) **Abstract**

A machine (1) for the inspection of containers (2), preferably of the pharmaceutical industry and at least partially filled comprises: a conveyor drum (3), which can rotate around a vertical axis (V), configured to receive a plurality of containers (2), each carried in a rotary manner so as to rotate on itself, and to transport the containers (2) along a first circular path (C1) in a first advancing direction (A); an inspection unit (4) for inspecting at least one container (2); and an operating assembly (5), which moves the inspection unit (4) back and forth along a second path (C2), at least partially parallel to the first path (C1); the operating assembly (5) can be operated in a synchronous manner with the drum (3) so that, in use, the inspection unit (4) follows the container (2); the inspection unit (4) comprises at least one high-voltage leak detection system (6) for controlling the integrity of the container (2) by applying an electric field.

## Description

### CROSS-REFERENCE TO RELATED APPLICATIONS

This patent application claims priority from Italian patent application no. 102025000004005 filed on February 27, 2025, the entire disclosure of which is incorporated herein by reference.

### TECHNICAL FIELD

The present invention relates to a machine and to a method for the inspection of containers, preferably of the pharmaceutical industry.

### PRIOR ART

In the field of automated machines for the inspection of containers (such as bottles, ampoules or syringes), high-voltage leak detection systems are known for detecting holes or cracks in glass containers, substantially filled, by using electricity. In particular, electricity permits verifying the integrity of the containers, usually consisting of insulating material (glass), which contain products that conduct electricity, generally in liquid form (such as a drug in a liquid solution, beverages etc.).

In detail, during the detection, a potential difference is applied to the container by means of two electrodes arranged at opposite ends of the container and possible current peaks induced by defects, such as cracks or holes, are measured, which determine the formation of a current arc or, in general, the arising of electrical conductivity variations.

The most common high-voltage leak detection systems provide for carrying out the detection during the linear advancing of the containers performed by means of a screw conveyor arranged horizontally. In particular, the containers are usually arranged at the lower (or upper) branch of the screw conveyor.

Generally, for example when the containers are arranged in the lower compartments of the screw conveyor resting on a sliding plane, in order to examine the container along its entire height several electrodes are used, typically at least four, each of which is arranged so as to be able to examine a certain portion of the container (head, bottom, body or shoulder). For such purpose, for example, openings are made on the sliding plane in different positions along the height of the product. This expedient permits ensuring a support for the rolling of the container (the sliding plane) and, at the same time, examining every portion of interest.

However, the known solutions require the addition of an additional transporter, the screw conveyor in the known container inspection systems, with consequent increase in costs, manufacturing difficulty and, above all, in bulks, especially in terms of plan occupation (layout), given that the length of the screw conveyor (arranged horizontally) must be such as to ensure the complete rotation of the product on itself during the inspection, so as to cause the liquid contained in the container to wet the entire lateral surface, ensuring the inspection of the totality of the lateral surface of the container to be inspected. In practice, the length of the screw conveyor is usually greater than 1 m.

Additionally, the known systems rely on the friction (ensured by the presence of O-rings) between the sliding plane and container for obtaining the rolling of the container on itself, making the exact control of the rotation of the container difficult and, therefore, the integrity control not very robust.

Furthermore, in case of format change of the containers to be inspected, in the known systems it is necessary to perform machine adjustment operations, which are generally performed manually, with all the drawbacks of manual work in terms of time and precision/repeatability of the operation, with consequent production waste or even machine downtime.

### DESCRIPTION OF THE INVENTION

The object of the present invention is to provide a machine and a method for the inspection of containers, preferably of the pharmaceutical industry, which are at least partially exempt from the drawbacks described above and, at the same time, are simple and cost-effective to manufacture.

In accordance with the present invention, a machine and a method for the inspection of containers, preferably of the pharmaceutical industry, are provided according to what claimed in the appended claims.

The claims describe preferred embodiments of the present invention forming integral part of the present description.

### BRIEF DESCRIPTION OF THE DRAWINGS

The present invention will now be described with reference to the accompanying drawings, which illustrate some non-limiting example embodiments thereof, wherein:
- Figure 1 is a perspective view of a machine for the inspection of containers in accordance with the present invention;
- Figure 2 is a perspective view of the machine of Figure 1 with some parts removed for clarity;
- Figure 3 is a perspective view of the same part of the machine illustrated in Figure 2 in which some components have been removed to better illustrate other ones;
- Figure 4 is a perspective view of an inspection unit of the machine of the previous figures during the inspection of containers;
- Figures 5 and 6 are two perspective views of a detail of the inspection unit of Figure 4 from two different angulations; and
- Figure 7 is a schematic plan view of the machine of Figure 1.

### PREFERRED EMBODIMENTS OF THE INVENTION

With reference to the accompanying figures, reference numeral 1 generically indicates a machine for the inspection of containers 2; preferably but not limitedly, for inspecting containers 2 of the pharmaceutical industry; more preferably, advantageously but not limitedly, the inspection machine 1 is particularly suitable for containers 2 at least partially filled; more advantageously but not limitedly, for containers 2 substantially filled and preferably equipped with sealing plungers, such as syringes; in particular, but not limitedly, the inspection machine 1 is particularly suitable for glass containers 2.

In the present description, the same reference numerals and the same reference letters in the figures identify the same elements or components with the same function.

Within the scope of the present description, the term "second" component does not imply the presence of a "first" component. In fact, such terms are utilized as labels so as to improve clarity and are not to be understood in a limiting manner.

According to the non-limiting embodiments of the accompanying figures, the inspection machine 1 comprises: a conveyor drum 3, which can rotate around a first vertical rotation axis V, and is configured to receive a plurality of containers 2 to be inspected, each carried in a rotary manner so as to be able to rotate on itself around a second rotation axis P, parallel to the first rotation axis V, and to transport the plurality of containers 2 along a first substantially circular transport path C1 that is centred with respect to the first rotation axis V in a first advancing direction A.

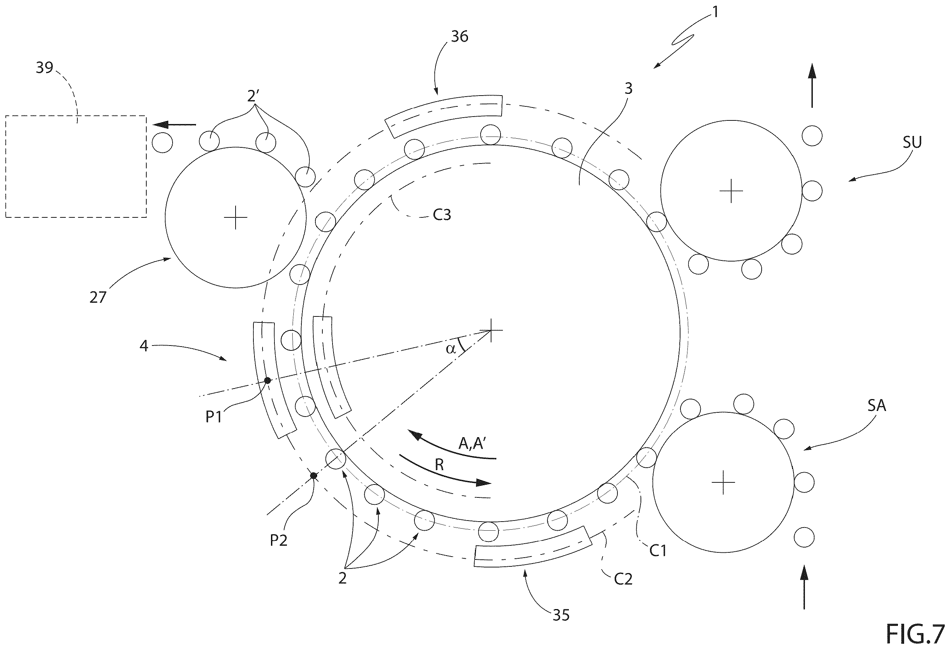

In particular, il conveyor drum 3 is configured to transport the plurality of containers 2 from a feeding station SA to an output station SU, as is schematically illustrated in Figure 7. In detail, the containers 2 are introduced into the feeding station SA in a known manner, for example by means of a conveyor belt or a further drum (not illustrated), and are conveyed towards the output station SU, passing through successive stations of the production line, still in a known manner, for example by means of a conveyor belt or a further drum (not illustrated).

The machine 1 comprises at least one first inspection unit 4 for inspecting the integrity of at least one container 2 of the plurality of containers 2, during the conveying thereof, and an operating assembly 5 (or moving assembly) which carries the first inspection unit 4 and can be operated so as to move the first inspection unit 4 along a second transport path C2, at least partially parallel to the first transport path C1. In other words, the operating assembly 5 is configured to move (transport) the inspection unit 4 in a second advancing direction A', similar to the first advancing direction A, or in a third advancing direction R, opposite the first advancing direction A (and thus the second advancing direction A').

The operating assembly 5 can be operated so as to move the first inspection unit 4 alternatively according to a forward stroke from an initial position P1 to a final position P2, in which the first inspection unit 4 inspects at least one first container 2 during the conveying thereof, and according to a return stroke, from the position P2 to the position P1. In other words, the operating assembly 5 can be operated so as to move the first inspection unit 4, back and forth along the second transport path C2, in a synchronous manner with the conveyor drum 3 so that, in use, the inspection unit 4, moving along an inspection segment of the second transport path C2 from an initial position P1 to a final position P2, downstream of the initial position P1 in the second advancing direction A' (as is illustrated in Figure 7), follows at least one of the containers 2, in motion along the first transport path C1, so as to be able to inspect (control) the container 2. In such manner, it is possible to control the integrity of the container 2 in movement during its transport along the inspection segment, without the need to stop it, with a consequent saving in terms of time.

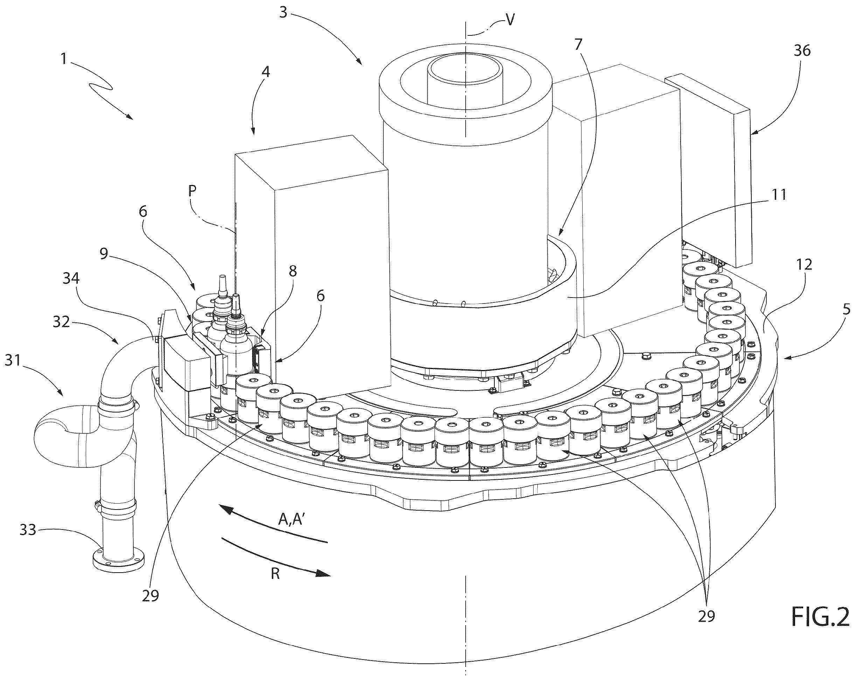

Preferably but not limitedly, the machine comprises a kinematic connection system 7 (partially visible in Figure 2) which is operatively (functionally) interposed between the operating assembly 5 and the conveyor drum 3 and is configured to operatively (functionally) associate the inspection unit 4 with the container 2 along a forward stroke, and to operatively (functionally) uncouple the inspection unit 4 from the container 2 during a return stroke.

In other words, the kinematic connection system 7 is configured to operatively (functionally) associate the inspection unit 4 with the container 2 along an operating stroke, during which the inspection unit 4 is moved along the above-mentioned inspection segment in the second advancing direction A' similar to the first advancing direction A from the initial position P1 to the final position P2, and to operatively (functionally) uncouple the inspection unit 4 from the container 2 during the return stroke, during which the inspection unit 4 is moved along the inspection segment from the final position P2 to the initial position P1 in the third advancing direction R.

The first inspection unit 4 comprises (in particular, is formed by) at least one high-voltage leak detection system 6 configured to control the integrity of the container 2 by applying an electric field configured to go through the container 2 and by detecting possible current arcs or variations in the electrical conductivity. In other words, the detection system 6 is configured to control the integrity of the container 2 by applying a high voltage to the container 2, in particular, a voltage between at least (approximately) 1 kV and 10 kV, in particular between 2 kV and 6 kV, at opposite ends of the container 2 and to detect possible current arcs or variations in the electrical conductivity induced by the presence of defects or cracks in the container 2.

In detail, the mentioned high-voltage leak detection system 6 is a system of the known type and, therefore, its operation will not be described in detail in the following.

According to the advantageous but non-limiting embodiment illustrated in the accompanying figures, the first inspection unit 4 comprises two detection systems 6, configured to control the integrity of two respective containers 2, while the first inspection unit 4 moves along the operating stroke.

In particular, the two detection systems 6 have an equivalent operation, in particular are identical with respect to each other and are formed by equivalent, in particular identical, mechanical and electronic components. Therefore, in the following, reference will be made to one single detection system 6 and to its respective container 2, without thereby losing generality.

Preferably but not limitedly, the (each) detection system 6 comprises a pair of electrodes 8, 9, comprising (in particular, formed by), in turn, a first electrode 8 for emitting an electric field (a high voltage, in particular, a voltage comprised between approximately 1 kV and 10 kV) and a second electrode 9, for detecting possible current flows through the container 2.

In detail, the applied voltage value depends on the distance between the electrodes 8, 9 and the walls of the container 2. In particular, not limitedly, such distance is comprised between 1 mm and 2 mm. For example, in order to generate the electric arc on the container 2 with the first electrode 8 at a distance of 1 mm from the wall of the container 2, at least 3 kV are necessary, considering that the dielectric strength of air is approximately 3 kV/mm.

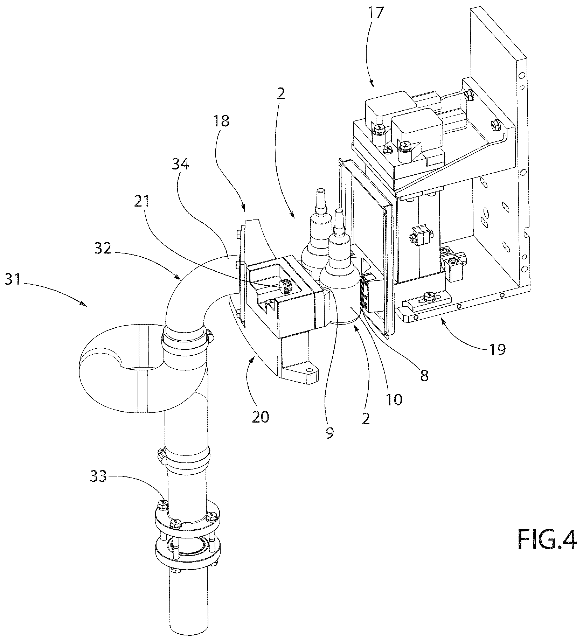

According to some advantageous but non-limiting embodiments such as the one illustrated, the first and second electrodes 8, 9 are arranged on opposite sides with respect to the first transport path C1 so that, in use, while the first inspection unit 4 moves between the initial position P1 and the final position P2, the first and the second electrodes 8, 9 are arranged on diametrically opposite sides with respect to the container 2. In other words, the first and second electrodes 8, 9 are arranged on opposite sides with respect to the first transport path C1 so that, in use, while the first inspection unit 4 moves along the inspection segment, the first and the second electrodes 8, 9 are arranged on diametrically opposite sides with respect to the container 2. Namely, the electrodes 8, 9 are arranged, in use, facing two opposite portions of a lateral surface 10 of the container 2, as is better illustrated in Figure 4.

In particular, as is known, in order to perform the inspection by means of the high-voltage detection system 6, the electrodes 8, 9 are maintained at a predefined distance (gap) from the container 2 (even if this is not visibly apparent in the accompanying figures). Preferably but not limitedly, the electrodes 8, 9 are radially fixed at a defined distance from each other and from the container 2 during the inspection, namely while the inspection unit 4 moves along the above-mentioned path C2.

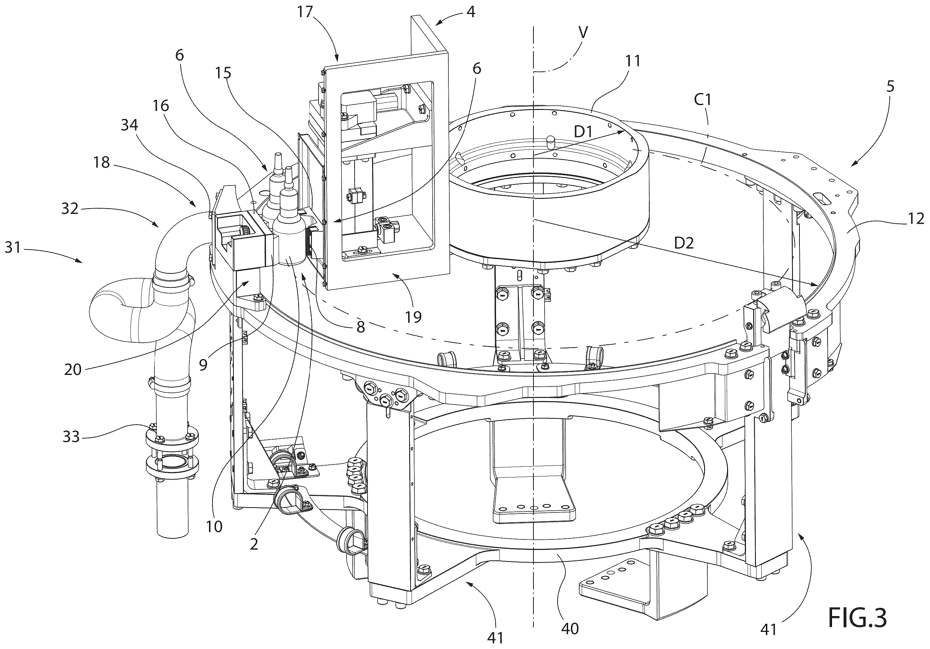

Preferably but not limitedly, as is better illustrated in Figure 3, the operating assembly 5 comprises a first element 11 arranged at a first radial distance D1 from the first rotation axis V and configured to carry one of the first and second electrodes 8, 9 and a second element 12 arranged at a second radial distance D2 from the first rotation axis V, which is greater than the first radial distance D1, so as to carry the other one of the first and second electrodes 8, 9. In such manner, in use, the containers 2 are radially interposed between the first element 11 and the second element 12 along the transport path C1.

In particular, the inspection segment is a circular arc of the second transport path C2, comprised between the initial position P1 and the final position P2, as is illustrated in Figure 7.

Preferably, according to the illustrated non-limiting embodiment, the first element 11 is a first ring (or a first annular guide) and the second element 12 is a second ring (or a second annular guide). In particular, the first element 11 and the second element 12 are circular rings that are concentric with respect to each other and coaxial to the conveyor drum 3. In such manner, the first and the second transport paths C1, C2 are circular and concentric with respect to each other. In particular, the second element 12 moves the electrode 9 along the transport path C2 and the first element 11 moves the electrode 8 along the transport path C3 which is concentric with respect to the path C2 (and thus C1) (see in particular, Figure 7). In particular, being the two elements 11 and 12 integral with each other, the electrodes 8 and 9 are moved together along the inspection segment, both during the operating stroke and during the return stroke.

In particular, according to what is illustrated in Figure 3, the element 12 (namely the outermost ring) is mechanically connected to a further ring 40 having a smaller diameter by means of a series of angular support structures 41.

In the described non-limiting embodiment, the kinematic connection system 7, mentioned above, comprises a pair of crossed roller bearings (not illustrated) which operatively couple the operating assembly 5 and the conveyor drum 3, so as to permit the independent (but advantageously synchronous) rotation of the operating assembly 5 with respect to the conveyor drum 3 around the axis V. In detail, advantageously but not limitedly, while the conveyor drum 3 moves the plurality of containers 2 along the first transport path C1, the operating assembly 5 moves the inspection unit 4 along the second transport path C2 (and the third transport path C3) back and forth between the initial position P1 and the final position P2.

Preferably but not limitedly, the first electrode 8 and the second electrode 9 are connected to the first element 11 or the second element 12 in a releasable manner.

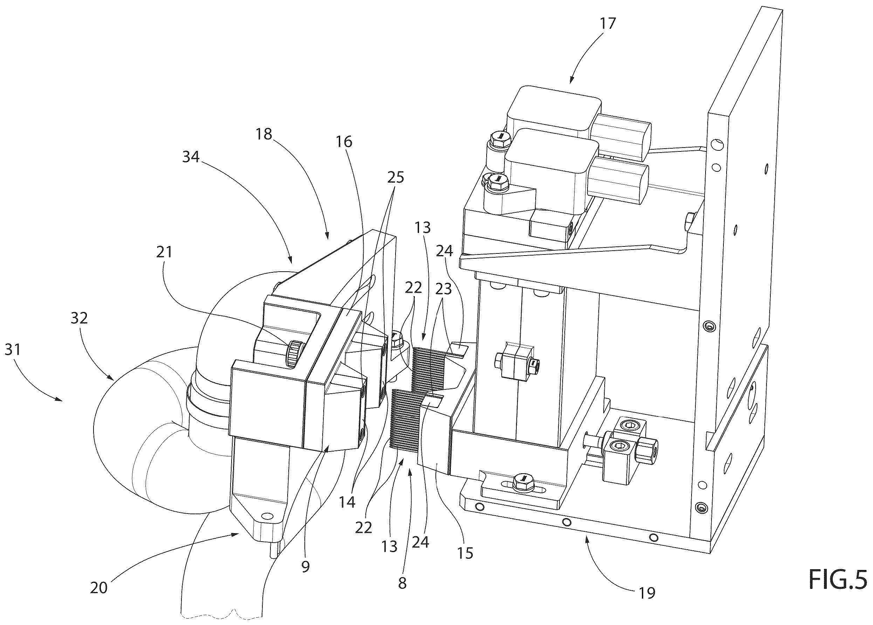

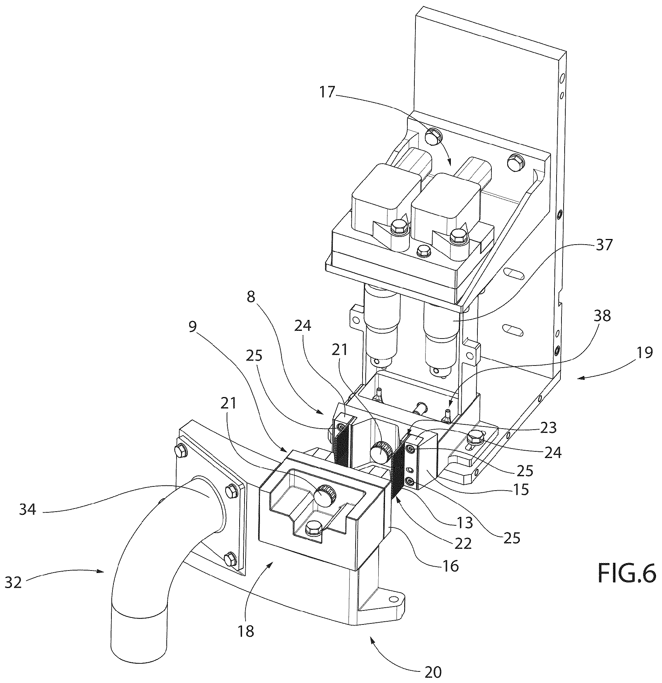

In detail, as is better illustrated in Figures 5 and 6, advantageously but not limitedly, each of the first electrode 8 and the second electrode 9 comprises an electrically conductive operating portion 13, 14 and a coupling portion 15, 16.

In particular, the operating portions 13, 14, being electrically conductive (in particular, metallic), are configured to conduct current and permit, in actual fact, the high-voltage control of the container 2.

Whereas, preferably, the coupling portions 15, 16 are made of insulating material (in particular, plastic) so as to connect the electrodes 8, 9 to the elements 11, 12 in a safe manner, avoiding the risk of conduction (dispersion) of undesired currents or the presence of residual currents.

In particular, the coupling portions 15, 16 of the first electrode 8 and of the second electrode 9 are configured to couple to the first element 11 and to the second element 12 in a releasable manner.

In particular, advantageously but not limitedly, each of the first element 11 and the second element 12 comprises a respective support portion 19, 20.

Preferably but not limitedly, the coupling portions 15, 16 of the first electrode 8 and of the second electrode 9, respectively, are configured to couple to the respective support portion 19, 20 in a releasable manner (see, for example, Figures 5 and 6).

In particular, according to the illustrated non-limiting embodiment, the coupling portions 15, 16 are fixed to the support portions 19, 20 by means of respective releasable threaded connections, in particular screws (not illustrated), equipped with a knob 21 which can be operated (by means of rotation) by a user so as to unscrew/screw the screw and remove/assemble the electrodes 8, 9. In such manner, the electrodes 8,9 are easily interchangeable by the user in case of wear or format change of the container 2 to be inspected.

For example, in the case of format change, namely in the case where the machine 1 must be utilized for inspecting a container 2 having dimensions different from that illustrated, for example having a base surface having greater extent, it will be possible to replace the electrodes 8, 9 with electrodes having smaller radial thickness, instead of modifying the machine 1 in a more invasive manner, for example by varying the distance between the elements 11 and 12 of the operating assembly 5 or the entire operating assembly 5.

According to the illustrated non-limiting embodiment, with particular reference to Figures 5 and 6, the operating portion 13 is comb-shaped, namely has a series of thin teeth 22 that are parallel and close to one another and held together by a joint portion 23, transverse to the teeth 22 and fixed in a known manner (for example, inserted by interference in a provided housing) to a (an electrically conductive) connection element 24 which, in turn, is fixed to the coupling portion 15 in a known manner, in particular by means of a pair of screws 25. In detail, the use of the teeth 22 is known and permits exploiting the concentration of the electric charges due to the so-called rocky-point effect.

In particular, according to the illustrated non-limiting embodiment, also the operating portion 14 of the electrode 9 (in particular, not limitedly, having a parallelepiped shape) is fixed by means of screws 25 to the coupling portion 16.

Preferably but not limitedly, the detection system 6 comprises a current generation unit 17 and a current detection unit 18, each carried by one of the first element 11 and the second element 12.

According to the non-limiting embodiment illustrated in Figure 6, the current generation unit 17 comprises a coil (a winding of conductive material) 37 of the known type and, therefore, not described in detail. The coil 37 is connected (in a manner not illustrated) to a pin 38 arranged in contact with the operating portion 13 so as to permit the passage of current generated by the coil 37.

In particular, according to the illustrated non-limiting embodiment, the current generation unit 17 is arranged on (on board) the first element or ring 11 and the current detection unit 18 is arranged on (on board) the second element or ring 12.

Advantageously but not limitedly, in particular, the current generation unit 17 and the current detection unit 18 are arranged on board the support portions 19, 20, respectively.

According to the illustrated non-limiting embodiment, also the operating portion 14 of the electrode 9 is in contact with a conductive pin, not visible in the accompanying figures. Such pin is connected to the current detection unit 18 by means of a known and not illustrated electrical connection, for example an electric cable electrically connected to the pin by means of a cable lug or a terminal.

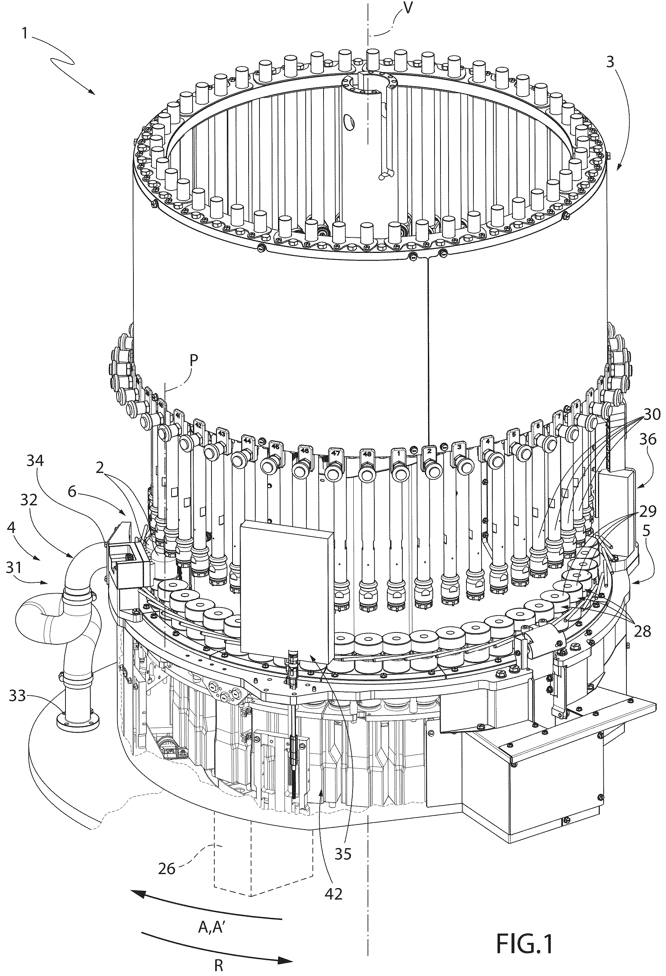

Preferably but not limitedly, the machine 1 comprises a control unit 26, schematically illustrated in Figure 1, connected to the first inspection unit 4 and configured to analyse the data obtained by the first inspection unit 4 and to identify, based on such data, possible containers 2' to be rejected.

In particular, the control unit 26 is connected to the current detection unit 18 so as to receive data indicative of the possible detection of current going through the container 2 and as a function of such data determine the presence of defects/cracks on the container 2 so as to identify possible defective containers 2' to be rejected (only schematically illustrated in Figure 7).

Furthermore, preferably but not limitedly, the machine 1 comprises a reject unit 27 which can be operated so as to move the possible defective containers 2' to be rejected towards a reject station 39 and configured to reject the possible defective containers 2' away from the conveyor drum 3. The control unit 26 is configured to control the reject unit 27 as a function of the data received from the inspection unit 4, in particular from the current detection unit 18. In detail, if the control unit 26 identifies the presence of defective containers 2', the control unit 26 operates the reject unit 27 so as to send the defective containers 2' to the reject station 39.

According to the non-limiting embodiment schematically illustrated in Figure 7, the reject unit 27 is arranged upstream of the output station SU and can be operated so as to move the possible defective containers 2' towards the reject station 39 (schematically illustrated by a dashed line).

According to a non-limiting variant not illustrated, the reject unit 27 is arranged downstream of the conveyor drum 3, in particular downstream of the output station SU, so as to reject the possible defective containers 2' while the containers 2 are being transported by further cylindrical transport wheels.

Preferably but not limitedly, the inspection segment of the transport path C2 is a circular arc that subtends a central angle α with a width that is greater than or equal to 5° and smaller than or equal to 20°. In particular, the central angle α is equal to 10°. Such 10° angle permits the effective inspection of two containers 2 provided for by the non-limiting embodiment of the described machine 1, ensuring the desired productivity of the production line in which the machine 1 is inserted.

In detail, as is schematically illustrated in Figure 7, advantageously but not limitedly, the inspection unit 4 is moved by the operating assembly 5 along the second transport path C2 (and the third transport path C3) between the initial position P1 and the final position P2 which, in the illustrated non-limiting case being the inspection segment a circular arc, are the ends of such arc.

According to the illustrated non-limiting embodiment, in use, the inspection unit 4 thus follows, in particular pursues, at least one container 2 (in particular, in the illustrated case a pair of containers 2) along the inspection segment during the operating stroke while the inspection of each container 2 is performed by means of the respective detection system 6.

Furthermore, as described in the foregoing, the containers 2 are carried in a rotary manner so as to be able to rotate on themselves around the second rotation axis P. In such manner, the liquid contained in the (partially filled) containers wets the totality of the inner surface of the containers 2, permitting the passage of the electric current and thus the effective control of the integrity of the containers 2.

Preferably but not limitedly, the conveyor drum 3 comprises a plurality of (gripping) support devices 28, each configured to receive a container 2 and each capable of rotating on itself around the second rotation axis P so as to permit at least one complete rotation (in particular, by 360°) of the respective container 2, while it is being transported along the first transport path C1, in particular, while the first inspection unit 4 moves along the inspection segment during the operating stroke.

In particular, each support device 28 is configured to permit a plurality of complete rotations of the respective container 2, while it is being transported along the first transport path C1, more in particular, while the first inspection unit 4 moves along the inspection segment during the operating stroke. Preferably, each support device 28 is configured to permit at least eight, more preferably between ten and twenty, complete rotations of the respective container 2, while it is being transported along the first transport path C1. In such manner, every portion of the lateral surface 10 of the containers is exposed to the electrodes 8, 9 a plurality of times (in particular, at least eight) and is therefore analysed several times, favouring a robust control of the integrity of the container.

As is illustrated in the non-limiting embodiment in Figure 1, each support device 28 comprises a lower support 29, in particular a plate (or a housing), mounted so as to rotate and on which a lower portion of the container 2 rests and a counter element 30 which is mounted so as to rotate and engages an upper portion of the container 2. In detail, it should be noted that Figure 1 only illustrates two containers 2, for simplicity of representation, whereas, in use, further containers 2 are present between the illustrated lower support 29 and counter element 30.

According to the illustrated non-limiting embodiment, the lower supports 29 are driven into rotation by means of a movement system 42 partially visible in Figure 1 and comprising a series of electric motors and a gear system, of the known type and not described in the following.

In detail, the container 2 is driven into rotation when it is arranged between the lower support 29 and the counter element 30, at its lower and upper portions, respectively, thanks to the rotation of the lower support 29 and the contact with the upper counter element 30.

Preferably but not limitedly, the machine 1 further comprises a suction device 31 configured to suck substances (in particular, ozone) emitted, in use, by the detection system(s) 6 and a tube 32, which comprises, in turn, a first fixed end 33 and a second end 34 connected to the operating assembly 5, close to the first inspection unit 4. Advantageously but not limitedly, such tube 32 has an extensible structure so as to shift, in a reversible manner, from a compressed configuration, when the first inspection unit 4 is in the initial position P1 of the inspection segment to an extended configuration, when the first inspection unit 4 is in the final position P2 of the inspection segment, and vice versa.

In particular, the tube 32 is made of flexible or compressible material, for example of plastic material. According to another non-limiting example, the tube 32 is a tube with a bellows-type structure. In such manner, the tube 32 adapts, by compressing and expanding, to the movement of the operating assembly 5 between the initial P1 and final P2 positions ensuring the suction in every intermediate position.

With particular reference to Figures 1 and 7, preferably but not limitedly, the machine 1 comprises at least one second inspection unit 35 (known per se and not described in detail herein) configured to perform a cosmetic control of the containers 2, and a third inspection unit 36 configured to perform a particle control of the containers 2, arranged on board (mounted on/carried by) the operating assembly 5.

In particular, advantageously but not limitedly, at the third inspection unit 36 for the particle control it is provided for the containers 2 to be driven into rotation on themselves so as to favour the visibility of possible particles and make to the control more robust. In detail, advantageously but not limitedly, as already described above, the containers 2 are arranged on support devices 28 provided on board the conveyor drum 3 configured to drive into rotation the containers 2 on themselves around the respective second rotation axes P during the operating stroke, when the inspection is performed by means of the first inspection unit 4. Advantageously but not limitedly, the containers 2 are driven into rotation by the same support devices 28 also at the third inspection unit 36.

Preferably but not limitedly, the second inspection unit 35 is arranged upstream of the first inspection unit 4 (with respect to the advancing direction A) and the third inspection unit 36 is arranged downstream of the first inspection unit 4 (with respect to the advancing direction A). In such manner, the containers 2 are driven into rotation prior to the high-voltage inspection at the inspection unit 4 and maintained in rotation also for the subsequent control, at the particle inspection unit 36.

In accordance with a further aspect of the present invention, a method for inspecting containers 2, preferably, containers 2 of the pharmaceutical industry, is provided; in particular, containers 2 at least partially filled; more advantageously substantially filled as described above in relation to the machine 1.

The method comprises the steps of:
- transporting, by means of a conveyor drum 3 (advantageously but not limitedly of the type described above), which can rotate around the first vertical rotation axis V, the above-mentioned plurality of containers 2, each carried in a rotary manner so as to be able to rotate on itself around the second rotation axis P, parallel to the first rotation axis V, along the first circular transport path C1 in the first advancing direction A; and
- inspecting, by means of at least one first inspection unit 4 (advantageously but not limitedly of the type described above), the container 2 during the transport thereof, while the inspection unit 4 is moved by an operating assembly 5 (advantageously but not limitedly, of the type described above) along the second transport path C2, at least partially parallel to the first transport path C1, alternatively according to a forward stroke from an initial position P1 to a final position P2, during which the inspection takes place, and according to a return stroke, from the position P2 to the position P1; in other words, the operating assembly 5 is operated in a synchronous manner with the conveyor drum 3 so that the inspection unit 4 inspects such container 2 while it moves along an inspection segment of the second transport path C2 from an initial position P1 to a final position P2, following the container 2 to be inspected.

During the inspecting step, the detection system 6 comprised in the inspection unit 4 controls the integrity of the container 2 by applying an electric field that goes through the container 2 and by detecting possible current flow variations through the container 2 or electrical conductivity variations.

Preferably but not limitedly, the inspecting step comprises:
- an operating sub-step, during which a kinematic connection system 7 (advantageously but not limitedly, of the type described above) operatively associates the inspection unit 4 with the container 2 along the forward stroke; in other words, the kinematic connection system 7 operatively associates the inspection unit 4 with the container 2 along an operating stroke, during which the inspection unit 4 is moved along the inspection segment in a second advancing direction A' similar to the first advancing direction A from the initial position P1 to the final position P2; and
- a return sub-step, during which the kinematic connection system 7 operatively uncouples the inspection unit 4 from the container 2 during the return stroke; in other words, the kinematic connection system 7 operatively uncouples the inspection unit 4 from the container and the inspection unit 4 is moved along the inspection segment from the final position P2 to the initial position P1 in the third advancing direction R along a return stroke.

Preferably but not limitedly, during the inspecting step, the first electrode 8 emits an electric field and the second electrode 9 detects possible current flows through the container 2, while the first and second electrodes 8, 9 are arranged on opposite sides with respect to the first transport path C1.

Preferably but not limitedly, the method further comprises:
- an analysing step, during which the control unit 26 connected to the first inspection unit 4 analyses the data obtained by the first inspection unit 4 and identifies, based on such data, possible containers 2' to be rejected;
- a control step, during which the control unit 26 controls the reject unit 27 as a function of the data received from the inspection unit 4; and
- a rejecting step, during which the reject unit 27 (is operated so as to move) moves the possible containers 2' to be rejected from the conveyor drum 3 towards a reject station 39 away from the conveyor drum 3.

Preferably but not limitedly, the method comprises a suction step, which is at least partly simultaneous with the inspecting step, during which the suction device 31 captures substances (in particular, ozone) emitted by the detection device(s) 6 during the operating sub-step described above.

Although the invention described above particularly refers to a very precise example embodiment, it is not to be considered limited to such example embodiment, falling within its scope all those variations, combinations, modifications or simplifications covered by the appended claims, such as for example a number of detection systems 6 greater than two for inspecting a larger number of containers 2 for each operating stroke, a different structure of the operating assembly 5, a rotary conveyor different from the described conveyor drum 3, different support devices 28, etcetera.

In particular, the electrodes 8, 9 could have a different shape and be coupled to the elements 11 and 12 in a releasable manner with a different mechanism.

Furthermore, the arrangement of the feeding station SA, output station SU and reject station 27 of the containers 2 could be different from what is illustrated.

Additionally, the machine 1 could have a number of high-voltage and/or particle and/or cosmetic inspection units (4, 35, 36) greater than those described and their arrangement could be different from what is illustrated.

The machine 1 and the method for inspecting containers 2 described above have numerous advantages.

Firstly, they permit, the controls carried out being equal, reducing the bulks in terms of plan occupation (layout) of the inspection machine 1, given that the integrity inspection of the containers 2 is carried out also on a rotary conveyor drum 3, instead of only in motion on a horizontally arranged screw conveyor.

Furthermore, the solution described above integrates with already existing conveyor drums 3, with a further saving in terms of costs and bulks. In other words, the present invention, at least in the case of substantially filled containers 2, makes possible the replacement or at least the reduction in terms of length of a specially provided screw conveyor transport system for controlling the integrity, when it is not already provided in machine, reducing costs in terms of components and modifications to the layout of the production line. Additionally, the described inspection method is particularly robust and exploits technologies already present in machine, such as the presence of the rotating support devices 28 which drive into rotation the containers 2 while they are being transported along the inspection segment, given that the lateral surface 10 of the containers is exposed to the electrodes 8, 9 and thus is analysed a plurality of times.

A further advantage of the present invention lies in the possibility to manage the format change of the containers 2 to be inspected in a quick and precise manner, without the need to perform machine adjustments, thanks to the releasable coupling provided for the electrodes 8, 9. In particular, in this manner, especially with respect to the cases where the adjustment is manual or semi-automated, the possibility of errors during the operation, and the production waste and the machine downtime are decreased.

### LIST OF THE REFERENCE NUMERALS OF THE FIGURES

- 1: machine
- 2, 2': containers
- 3: conveyor drum
- 4: inspection unit
- 5: operating assembly
- 6: detection system
- 7: kinematic connection system
- 8: electrode
- 9: electrode
- 10: lateral surface
- 11: element
- 12: element
- 13: operating portion
- 14: operating portion
- 15: coupling portion
- 16: coupling portion
- 17: current generation unit
- 18: current detection unit
- 19: support portion
- 20: support portion
- 21: knob
- 22: teeth
- 23: joint portion
- 24: connection element
- 25: screws
- 26: control unit
- 27: reject unit
- 28: support devices
- 29: lower support
- 30: counter element
- 31: suction device
- 32: flexible tube
- 33: end
- 34: end
- 35: inspection unit
- 36: third inspection unit
- 37: coil
- 38: pin
- 39: reject station
- 40: ring
- 41: support structures
- 42: movement system
- A, A': advancing direction
- C1: transport path
- C2: transport path
- C3: transport path
- D1: radial distance
- D2: radial distance
- P: vertical rotation axis
- P1: initial position
- P2: final position
- R: advancing direction
- SA: feeding station
- SU: output station
- V: vertical rotation axis
- α: central angle

## Claims

1. A machine (1) for the inspection of containers (2), preferably of the pharmaceutical industry, in particular at least partially filled; the machine (1) comprises:
a conveyor drum (3), which can rotate around a first vertical rotation axis (V) and is configured to receive a plurality of containers (2), each carried in a rotary manner so as to be able to rotate on itself around a second rotation axis (P), parallel to the first rotation axis (V), and to transport said plurality of containers (2) along a first circular transport path (C1) in a first advancing direction ( A);
at least one first inspection unit (4) for inspecting at least one container (2) of said plurality of containers (2) during the conveying thereof; and
an operating assembly (5), which carries at least said first inspection unit (4) and can be operated so as to move the first inspection unit (4), along a second transport path (C2), at least partially parallel to the first transport path (C1), alternatively according to a forward stroke from an initial position (P1) to a final position (P2), wherein the first inspection unit (4) inspects at least one first container (2) during the conveying thereof, and according to a return stroke, from the final position (P2) to the initial position (P1);
the machine (1) being **characterized in that:**
said at least one first inspection unit (4) comprises at least one high-voltage leak detection system (6) configured to control the integrity of the at least one container (2) by applying an electric field configured to go through the at least one container (2).

2. The machine (1) according to claim 1, comprising a kinematic connection system (7), which is operatively interposed between the operating assembly (5) and the conveyor drum (3) and is configured to operatively associate said first inspection unit (4) with the at least one container (2) along the forward stroke and to operatively uncouple the first inspection unit (4) from the at least one container (2) along the return stroke.

3. The machine (1) according to claim 1 or 2, wherein the at least one detection system (6) comprises a pair of electrodes (8, 9) comprising, in turn, a first electrode (8) for emitting an electric field and a second electrode for detecting possible current flows through said container (2); said first and second electrodes (8, 9) being arranged on opposite sides with respect to said first transport path (C1) so that, in use, while the first inspection unit (4) moves between the initial position (P1) and the final position (P2), said first and second electrodes (8, 9) are arranged on diametrically opposite sides with respect to the container (2).

4. The machine (1) according to claim 3, wherein the operating assembly (5) comprises: a first element (11), in particular a first ring, arranged at a first radial distance (D1) from the first rotation axis (V) and configured to carry one of said first and second electrodes (8, 9); and a second element (12), in particular a second ring, arranged at a second radial distance (D2) from the first rotation axis (V), which is greater than the first radial distance (D1), so as to carry the other one of said first and second electrodes (8, 9) and, in use, along the first transport path (C1), the containers (2) are radially interposed between the first element (11) and the second element (12).

5. The machine (1) according to claim 4, wherein the first electrode (8) and the second electrode (9) are connected to the first element (11) or to the second element (12) in a releasable manner.

6. The machine (1) according to claim 5, wherein: the first element (11) and the second element (12) each comprise a respective support portion (19, 20); each of the first electrode (8) and the second electrode (9) comprises a respective electrically conductive operating portion (13, 14) and a respective electrically insulating coupling portion (15, 16); each coupling portion (15, 16) is configured to couple to the respective support portion (19, 20) in a releasable manner.

7. The machine (1) according to any one of the preceding claims and comprising: a control unit (26) connected to the first inspection unit (4) and configured to analyse the data obtained by the first inspection unit (4) and to identify, based on such data, possible defective containers (2') to be rejected; and a reject unit (27), which can be operated so as to move the possible containers (2') to be rejected towards a reject station (39) configured to reject the possible defective containers (2') away from the conveyor drum (3); said control unit (26) being configured to control the reject unit (27) as a function of the data received from said first inspection unit (4).

8. The machine (1) according to any one of the preceding claims, wherein the inspection segment of the second transport path (C2) is a circular arc that subtends a central angle (α) with a width that is greater than or equal to 5° and smaller than or equal to 20°, in particular equal to 10°.

9. The machine (1) according to any one of the preceding claims, wherein the conveyor drum (3) comprises a plurality of support devices (28), each configured to receive a container (2) of the plurality of containers (2) and each capable of rotating on itself around the second rotation axis (P) so as to permit at least one complete rotation, in particular at least eight complete rotations, of the respective container (2) while it is being transported along said first transport path (C1); more in particular, while the first inspection unit (4) moves along said inspection segment during said operating stroke.

10. The machine (1) according to any one of the preceding claims and comprising a suction device (31) configured to suck substances emitted, in use, by the at least one detection system (6) and a tube (32), which comprises, in turn, a first fixed end (33) and a second end (34) connected to the operating assembly (5), close to the first inspection unit (4), and has an extensible structure so as to shift, in a reversible manner, from a compressed configuration, when said first inspection unit (4) is in said initial position (P1), to an extended configuration, when said first inspection unit (4) is in said final position (P2), and vice versa.

11. The machine (1) according to any one of the preceding claims and comprising at least one second inspection unit (35) configured to perform a cosmetic control of the containers (2) and a third inspection unit (36) configured to perform a particle control of the containers (2), arranged on board the operating assembly (5); wherein the second inspection unit (35) is arranged upstream of the first inspection unit (4) and the third inspection unit (36) is arranged downstream of the first inspection unit (4).

12. A method for inspecting containers (2), preferably of the pharmaceutical industry, in particular at least partially filled, comprising the steps of:
transporting, by means of a conveyor drum (3), which can rotate around a first vertical rotation axis (V), a plurality of containers (2), each carried in a rotary manner so as to be able to rotate on itself around a second rotation axis (P), parallel to the first rotation axis (V), along a first circular transport path (C1) in a first advancing direction ( A); and
inspecting, by means of at least one first inspection unit (4), at least one container (2) of said plurality of containers (2) during the transport thereof; the first inspection unit (4) being moved by an operating assembly (5) along a second transport path (C2), at least partially parallel to the first transport path (C1), alternatively according to a forward stroke from an initial position (P1) to a final position (P2), during which the inspection takes place, and according to a return stroke, from the final position (P2) to the initial position (P1);
the method being **characterized in that:**
said at least one first inspection unit (4) comprises at least one high-voltage leak detection system (6) and, during the inspecting step, said detection system (6) controls the integrity of the at least one container (2) by applying an electric field that goes through the at least one container (2) and by detecting possible current flow variations through the container (2).

13. The method according to claim 12, wherein a kinematic connection system (7) is operatively interposed between the operating assembly (5) and the conveyor drum (3) and the inspecting step comprises:
an operating sub-step, during which said kinematic connection system (7) operatively associates the first inspection unit (4) with the at least one container (2) along the forward stroke; and
a return sub-step, during which said kinematic connection system (7) operatively uncouples the first inspection unit (4) from the at least one container (2) during the return stroke.

14. The method according to claim 12 or 13, wherein the at least one detection system (6) comprises a pair of electrodes (8, 9) and, during the inspecting step, a first electrode (8) of the pair of electrodes (8, 9) emits an electric field and a second electrode (9) of the pair of electrodes (8, 9) detects possible current flows through said container (2); said first and second electrodes (8, 9) being arranged on opposite sides with respect to said first transport path (C1) so that, during the operating sub-step, said first and second electrodes (8, 9) are arranged on diametrically opposite sides with respect to the container (2).

15. The method according to claim 12, 13 or 14 and comprising an analysing step, during which a control unit (26) connected to the first inspection unit (4) analyses the data obtained by the first inspection unit (4) and identifies, based on such data, possible defective containers (2') to be rejected; a control step, during which said control unit (26) controls a reject unit (27) as a function of the data received from said first inspection unit (4); and a rejecting step, during which a reject unit (27) moves the possible containers (2') to be rejected towards a reject station (39) away from the conveyor drum (3).

16. The method according to any one of the claims from 12 to 15 and comprising a suction step, which is at least partly simultaneous with the inspecting step and during which a suction device (31) captures substances emitted by the detection device (6) during the operating sub-step.
